# EUROPEAN PATENT SPECIFICATION

(11) **EP 3 581 258 B1**
(45) Date of publication and mention of the grant of the patent: **16.09.2020**
(21) Application number: 18177727.7
(22) Date of filing: 14.06.2018
(51) Int. Cl.: B01D 53/50, B01D 53/83

(54) **REACTOR FOR CLEANING FLUE GAS BY A DRY OR QUASI-DRY SORPTION PROCESS**
REAKTOR ZUR REINIGUNG VON RAUCHGASEN DURCH EINEN TROCKENEN ODER QUASI-TROCKENEN SORPTIONSPROZESS
RÉACTEUR POUR LA PURIFICATION DE GAZ DE FUMÉE PAR UN PROCÉDÉ DE SOPRTION SEC OU QUASI-SEC

(43) Date of publication of application: 18.12.2019
(73) Proprietor: Doosan Lentjes GmbH, 40880 Ratingen (DE)
(72) Inventor: BROSCH, Björn, 45136 Essen (DE); NARIN, Oguzhan, 45549 Sprockhövel (DE)
(74) Representative: Feucker, Max Martin

(56) References cited:
- CN-A- 102 441 324
- CN-A- 106 902 622

## Description

The present invention relates to a reactor for cleaning flue gases by a dry or quasi-dry sorption process, comprising
- a flue gas inlet at the bottom of the reactor,
- an outlet at the top of the reactor,
- a dry sorbent injection system with at least one dry sorbent outlet for injecting dry sorbent into the reactor, the at least one dry sorbent outlet being arranged between the flue gas inlet and the outlet.

The combustion gases produced in a combustion chamber are usually introduced as flue gas through the inlet into the reactor. A dry sorbent is injected into the flue gas, for example calcium oxide or calcium hydroxide powder is injected into the flue gas. According to the prior art the dry sorbent containing flue gas is forced through a venturi system, so that a so-called fluidized bed is formed downstream of the venturi system in order to enhance the sorption process. Accordingly, the flow cross section of the reactor downstream of the venturi system is much larger than the minimum total flow cross section at the venturi system. This implies that that reactor needs comparatively much space downstream of the venturi system.

In order to enhance the sorption process, it is known to inject water into the fluidized bed downstream of the venturi system. Alternatively, it is known to moisten the dry sorbent before injection into the reactor.

The dry sorbent is usually injected from a wall of the reactor into the reactor, so that the highest dry sorbent concentration is at the outer circumference of the reactor at the injection side.

After the sorbent comprising flue gas leaves the reactor through the outlet it is advanced to a separator/filter, in which solid particles are separated from the stream.

A reactor with the above descripted features is for example known from CN 101402019 B.

A further reactor with the above described features is known from CN 106 902 622 A, wherein the dry sorbent injection system has a plurality of dry sorbent outlets such that dry sorbent is injected at multiple locations into the reactor. Accordingly, CN 106 902 622 A discloses a reactor with the features of the preamble of claim 1.

It is desirable, that the process of cleaning (desulfurization) is performed more efficiently. Furthermore, it is desirable, that the reactor as a whole needs less space. Accordingly, it is an object of the invention to provide a reactor, in which the sorption processes are more efficiently and/or which is smaller in size.

This object is solved with a reactor according to claim 1. The dependent claims and the description disclose preferred embodiments, wherein single features of the preferred embodiments can be combined with each other in a technically meaningful manner.

The inventions are directed to a reactor which is arranged in a vertical manner. Accordingly, the flue gas inlet is arranged at the very bottom of the reactor, meaning that there is preferably no mean for collecting residuals below the flue gas inlet.

Usually, the flue gas is provided through a duct from a combustion chamber, which duct leads in a horizontal manner to the flue gas inlet of the reactor.

In such a vertical reactor, the flue gas outlet is arranged vertically above the flue gas inlet, so that the reactor can be considered that part, in which the flue gas advances vertically from the bottom to the top. The reactor is delimited by a reactor wall.

A dry sorbent (i.e. CaO or Ca(OH)₂ powder) is provided by the dry sorbent injection system into the reactor. The location(s) at which the dry sorbent comes into contact with the flue gas and is advanced from thereon with the flue gas through the reactor is considered the dry sorbent outlet.

According to the invention a plurality of water injection nozzles are arranged beneath the at least one dry sorbent outlet. Accordingly, the plurality of water injection nozzles are arranged between the flue gas inlet and the at least one dry sorbent outlet. Each water injection nozzle is connected to a water supply system, wherein the water injection nozzles are embodied to provide water droplets, water steam, water spray or the like into the reactor. The water droplets/spray are advanced with the flue gas stream towards the dry sorbent injection system, so that the water droplets/steam contact the dry sorbent as soon as the dry sorbent is injected into the reactor. This way the sorption process of the flue gas with the dry sorbent is enhanced, as immediately after injecting the dry sorbent into the reactor water for enhancing the sorption process is provided.

Preferably, at least three, more preferably at least five water injection nozzles are provided.

Preferably, the water injection nozzles are arranged in one, in particular horizontal plane within the reactor. The water injection nozzles can be evenly distributed in the plane. In this regard the distance between two neighboring nozzles may be about the same for all water injection nozzles. This way the water injection nozzles are evenly distributed over the flow cross section of the flue gas, so that the water droplets injected by the water injection nozzles are also evenly distributed within the flue gas.

Although the water injection nozzles may be directed obliquely to the flue gas flow or in counter flow to the flue gas flow, it is preferred and most efficient, if the water injection nozzles are directed upwards eventually with an angle towards the at least one dry sorbent outlet. Most preferable, the water injection nozzles are directed exactly upward. Accordingly, the water droplets are injected in direction of the flue gas flow at the water injection nozzles.

According to the invention the dry sorbent injection system has a plurality of dry sorbent outlets such that dry sorbent is injected at multiple locations into the reactor, wherein the dry sorbent outlets are spaced from a wall of the reactor. By providing a plurality (at least two, preferably at least three or four) dry sorbent outlets the dry sorbent can be injected evenly over the flow cross section of the reactor. When the dry sorbent outlet is spaced from the wall by i.e. at least 20 cm [centimeter], preferably at least 50 cm it can be avoided that the injected dry sorbent contacts the wall of the reactor immediately after injection. This way, deposition on the wall of the reactor is minimized. By injecting the dry sorbent at multiple locations in one plane of the reactor the dry sorbent can be even more uniformly distributed over the flow cross section. This way the contact efficiency with the flue gas and therefore the sorption process is enhanced.

Also, the plurality of dry sorbent outlets may be arranged in one horizontal plane, wherein the dry sorbent outlets may be arranged evenly distributed in that plane.

The dry sorbent system may have one or more guide elements on its underside towards the flue gas inlet in order to minimize or avoid vortexes of the flue gas. The guide element may extend along the supply line towards the dry sorbent outlet(s). In particular the at least one guide element tapers in cross section from the supply line towards its lower free end.

According to the prior art the flue gas stream is divided in a venturi section in multiple sub streams or sub channels. In one aspect it is suggest that no sub streams of the flue gas are formed and that only exactly one flow channel for the flue gas is present in the reactor. This also means that the plurality of dry sorbent outlets inject dry sorbent in the only one flow channel.

According to one embodiment the plurality of dry sorbent outlets are directed outwards towards the wall of the reactor. This means, that the dry sorbent advanced by the dry sorbent injection system is advanced in a radial direction towards the wall of the reactor at the dry sorbent outlets.

In order to avoid an effort to provide dry sorbent to every single sorbent outlet independently from each other it is suggested that the dry sorbent injection system has a single central supply line for all dry sorbent outlets, wherein the central supply line leads through a wall of the reactor into the reactor and from there to each sorbent outlet. Alternatively, it might be possible that the dry sorbent injection system has two or more supply lines. For example, two supply lines may extend to the dry sorbent outlets from opposite directions.

According to the invention each dry sorbent outlet has a lower discharge edge at which the flue gas stream flows along the dry sorbent outlet and at which the dry sorbent is injected into the reaction chamber. According to the invention the length of the lower discharge edge projected in a vertical direction is greater than the width of the sorbent outlet. The lower discharge edge of the sorbent outlet is in particular aligned in one horizontal plane. In order that the length of the discharge edge is greater than the width of the dry sorbent outlet the lower discharge edge extends back and forth within the horizontal plane. For example, the lower discharge edge can be zigzag shaped, partly circular shaped and/or partly oval shaped. In any case the longer lower discharge edge enhances the even distribution of the dry sorbent within the reactor already at the injection location of the dry sorbent.

It is also possible that more than one dry sorbent injection systems are embodied, each dry sorbent injection system having at least one dry sorbent outlet for injecting dry sorbent into the reactor. Each dry sorbent system may have a central supply line and multiple sorbent outlets as described above. The multiple dry sorbent injection systems may be arranged besides each other within one horizontal plane of the reactor, but it may also be possible that the dry sorbent injection systems are arranged above each other, the dry sorbent injection systems being arranged behind each other in the flow direction of the flue gas. It may be possible that one dry sorbent injection system is arranged in one sub stream or sub channel of the reactor. But it is preferred, that the multiple dry sorbent injection systems are arranged within one single flow channel of the reactor.

Preferably, the water injection nozzles are arranged horizontally offset to the at least one and preferably to all of the plurality of dry sorbent outlet(s). This way it can be achieved that the water droplets injected by the water nozzles can come into contact with the injected dry sorbent just after injection of the dry sorbent thereby enhancing the sorption process.

If the sorption process is enhanced, the need of a fluidized bed above the dry sorption injection system can eventually be avoided, so that the reactor can be build smaller.

According to a further aspect the reactor has a minimum flow cross section area, wherein the maximum flow cross section area of the reactor above the minimum flow cross section area is not more than 1.5 times the minimum flow cross section area. In particular, the maximum flow cross section area is not more than 1.2 times the minimum flow cross section area.

In this regard, it is also suggested that the maximum flow cross section area above the flue gas inlet and below the minimum flow cross section area is not more than 1.5, preferably not more than 1.2 times the minimum flow cross section area.

In this regard, it is also preferred that the at least one dry sorbent outlet or the at least one dry sorbent injection system or all dry sorbent outlets are arranged within or below the minimum flow cross section area. Accordingly, the dry sorbent is either injected below the minimum flow cross section area or within the minimum flow cross section area into the reactor. The flow cross section area being that cross sectional area, which can be flown through by the flue gas.

In particular, the minimum flow cross section area is formed by a single flow channel, in which the plurality of dry sorbent outlets are arranged. The minimum flow cross section of this single flow channel (i.e. delimited by the respective walls of the reactor) is, if at all only slightly smaller than the flow cross section below and above the minimum flow cross section area.

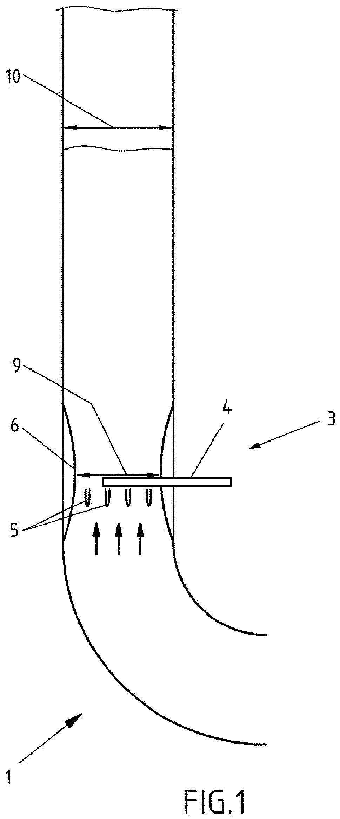

An exemplary embodiment of the invention is now described with regard to the figures. The figures show schematically
- Fig. 1:: a reactor and
- Fig. 2:: a cross sectional view through the reactor in top view onto the dry sorbent injection system.

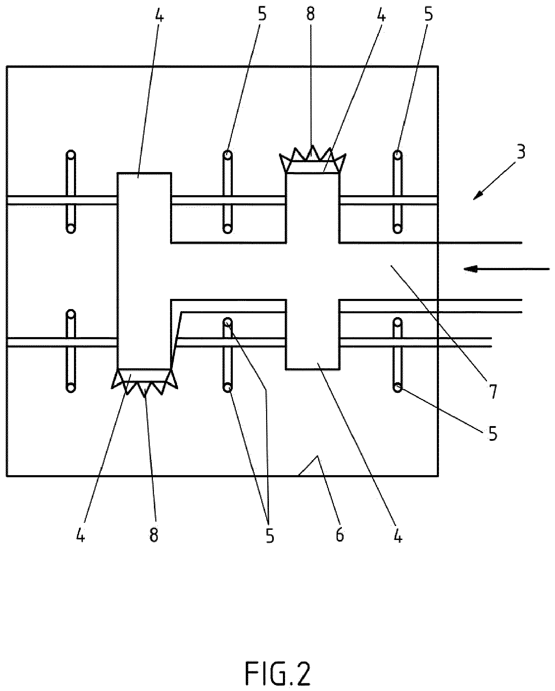

The figures show a reactor for cleaning flue gases by a dry sorption process. The reactor comprises a flue gas inlet 1 at its bottom and an outlet 2 at its top. A dry sorbent injection system 3 is arranged between the flue gas inlet 1 and the outlet 2. The dry sorbent injection system 3 is depicted in figure 2 in more detail.

Below the dry sorbent injection system 3 a plurality of water injection nozzles 5 are arranged. The water injection nozzles 5 are directed upwards towards the dry sorbent injection system 3.

As can be seen from figure 2 the dry sorbent injection system 3 comprises a central supply line 7 which leads into the reactor and which is connected to four dry sorbent outlets 4. The dry sorbent outlets 4 are arranged offset to and directed to a wall 6 of the reactor. The dry sorbent outlets 4 have each a lower discharge edge 8.

It can also be seen from figure 2 that the water injection nozzles 5 are horizontally offset to the dry sorbent outlets 4.

In use the flue gas advances from the flue gas inlet 1 through the reactor upwards towards the outlet 2. The water injection nozzles 5 spray water droplets into the flue gas, wherein the water droplets advance together with the flue gas to the dry sorbent outlets 4.

Dry sorbent is advanced through the central supply line 7 to the dry sorbent outlets 4 so that dry sorbent is injected over the lower discharge edges 8 of the dry sorbent outlets 4 into the reactor, whereas the injected dry sorbent comes directly into contact with the flue gas and with the water droplets provided by the water injection nozzles 5. As the flue gas, the water and the dry sorbent come into contact with each other as early as possible and evenly distributed over the cross section of the reactor the sorption process is highly efficient.

Due to the highly efficient sorption process it is not mandatory to provide a so called fluidized bed above the dry sorbent injection system 3. Accordingly, the maximum flow cross section area 10 above the dry sorbent injection system 3 is only slightly larger than the minimum flow cross section area 9 formed at the exactly one flow channel in which the dry sorbent injection system 3 injects the dry sorbent.

### List of reference number

- 1: flue gas inlet
- 2: outlet
- 3: dry sorbent injection system
- 4: dry sorbent outlet
- 5: water injection nozzle
- 6: wall
- 7: central supply line
- 8: discharge edge
- 9: minimum flow cross section area
- 10: maximum flow cross section area

## Claims

1. Reactor for cleaning flue gases by injecting dry or quasi-dry sorbent into a flue gas stream, comprising
- a flue gas inlet (1) at the bottom of the reactor,
- an outlet (2) at the top of the reactor,
- a dry sorbent injection system (3) with at least one dry sorbent outlet (4) for injecting dry sorbent into the reactor, the at least one dry sorbent outlet (4) being arranged between the flue gas inlet (1) and the outlet (2), wherein the dry sorbent injection system (3) has a plurality of dry sorbent outlets (4) such that dry sorbent is injected at multiple locations, wherein the dry sorbent outlet (4) has a lower discharge edge (8) at which the flue gas stream flows along the dry sorbent outlet (4) and at which the dry sorbent is injected into the reaction chamber, and
- a plurality of water injection nozzles (5) arranged beneath the at least one dry sorbent outlet (4), **characterized in that**
the lower discharge edge (8) extends back and forth, so that a length of the lower discharge edge (8) projected in a vertical direction is greater than the width of the dry sorbent outlet (4).

2. Reactor according to claim 1, the water injection nozzles (5) being arranged in one plane.

3. Reactor according to claim 1 or 2, the water injection nozzles (5) being directed upwards towards the at least one dry sorbent outlet (4).

4. Reactor according to one of the preceding claims, the plurality of dry sorbent outlets (4) being directed outwards towards the wall (6) of the reactor.

5. Reactor according to one of the preceding claims, the dry sorbent injection system (3) having a central supply line (7) for all dry sorbent outlets (4), the central supply line (7) leading into the reactor.

6. Reactor according to one of the preceding claims, wherein more than one dry sorbent injection systems (3) are embodied.

7. Reactor according to one of the preceding claims, the water injection nozzles (5) being arranged horizontally offset to the at least one dry sorbent outlet (4).

8. Reactor according to one of the preceding claims, **characterized in that** the reactor has a minimum flow cross section area (9), wherein the maximum flow cross section area (10) of the reactor above the minimum flow cross section area (3) is not more than 1.5 times the minimum flow cross section area (9).

9. Reactor according to claim 8, wherein the maximum flow cross section area above the flue gas inlet (1) and below the at least one dry sorbent outlet (4) is not more than 1.5 times the minimum flow cross section area (9).

10. Reactor according to claim 8 or 9, the at least one dry sorbent outlet (4) being arranged within or below the minimum flow cross section area (9).

11. Reactor according to one of the preceding claims, wherein a plurality of dry sorbent outlets (4) are arranged in exactly one flow channel.

## Patentansprüche

1. Reaktor zur Reinigung von Rauchgasen durch Einspeisen von trockenem oder quasi-trockenem Sorptionsmittel in einen Rauchgasstrom, umfassend
- einen Rauchgaseinlass (1) am Boden des Reaktors,
- einen Auslass (2) am oberen Ende des Reaktors,
- ein Einspeisesystem (3) für trockenes Sorptionsmittel mit mindestens einem Auslass (4) für trockenes Sorptionsmittel zum Einspeisen von trockenem Sorptionsmittel in den Reaktor, wobei der mindestens eine Auslass (4) für trockenes Sorptionsmittel zwischen dem Rauchgaseinlass (1) und dem Auslass (2) angeordnet ist, wobei das Einspeisesystem (3) für trockenes Sorptionsmittel eine Vielzahl von Auslässen (4) für trockenes Sorptionsmittel aufweist, so dass trockenes Sorptionsmittel an mehreren Stellen eingespritzt wird, wobei der Auslass (4) für trockenes Sorptionsmittel eine untere Abgabekante (8) aufweist, an der der Rauchgasstrom entlang des Auslasses (4) für trockenes Sorptionsmittel strömt und an der das trockene Sorptionsmittel in die Reaktionskammer eingespeist wird, und
- eine Vielzahl von Wassereinspritzdüsen (5) unterhalb des mindestens einen Auslasses (4) für trockenes Sorptionsmittel angeordnet sind, **dadurch gekennzeichnet, dass**
sich die untere Abgabekante (8) vor und zurück erstreckt, so dass eine in vertikaler Richtung projizierte Länge der unteren Abgabekante (8) größer ist als die Breite des Auslasses (4) für trockenes Sorptionsmittel.

2. Reaktor nach Anspruch 1, wobei die Wassereinspritzdüsen (5) in einer Ebene angeordnet sind.

3. Reaktor nach Anspruch 1 oder 2, wobei die Wassereinspritzdüsen (5) nach oben zu dem mindestens einen Auslass (4) für trockenes Sorptionsmittel gerichtet sind.

4. Reaktor nach einem der vorhergehenden Ansprüche, wobei die Vielzahl von Auslässen (4) für trockenes Sorptionsmittel nach außen zur Wand (6) des Reaktors hin gerichtet ist.

5. Reaktor nach einem der vorhergehenden Ansprüche, wobei das Einspeisesystem (3) für trockenes Sorptionsmittel eine zentrale Versorgungsleitung (7) für alle Auslässe (4) für trockenes Sorptionsmittel aufweist, wobei die zentrale Versorgungsleitung (7) in den Reaktor führt.

6. Reaktor nach einem der vorhergehenden Ansprüche, wobei mehr als ein Einspeisesystem (3) für trockenes Sorptionsmittel ausgebildet ist.

7. Reaktor nach einem der vorhergehenden Ansprüche, wobei die Wassereinspritzdüsen (5) horizontal versetzt zu dem mindestens einen Auslass (4) für trockenes Sorptionsmittel angeordnet sind.

8. Reaktor nach einem der vorhergehenden Ansprüche, **dadurch gekennzeichnet, dass** der Reaktor eine minimale Strömungsquerschnittsfläche (9) aufweist, wobei die maximale Strömungsquerschnittsfläche (10) des Reaktors oberhalb der minimalen Strömungsquerschnittsfläche (3) nicht mehr als das 1,5-fache der minimalen Strömungsquerschnittsfläche (9) beträgt.

9. Reaktor nach Anspruch 8, wobei die maximale Strömungsquerschnittsfläche oberhalb des Rauchgaseinlasses (1) und unterhalb des mindestens einen Auslasses (4) für trockenes Sorptionsmittel nicht mehr als das 1,5-fache der minimalen Strömungsquerschnittsfläche (9) beträgt.

10. Reaktor nach Anspruch 8 oder 9, wobei der mindestens eine Auslass (4) für trockenes Sorptionsmittel innerhalb oder unterhalb der minimalen Strömungsquerschnittsfläche (9) angeordnet ist.

11. Reaktor nach einem der vorhergehenden Ansprüche, wobei eine Vielzahl von Auslässen (4) für trockenes Sorptionsmittel in genau einem Strömungskanal angeordnet ist.

## Revendications

1. Réacteur destiné au nettoyage des gaz de combustion par injection d'un sorbant sec ou quasi-sec dans un flux de gaz de combustion, comprenant :
- une entrée de gaz de combustion (1) située dans la partie inférieure du réacteur,
- une sortie (2) située dans la partie supérieure du réacteur,
- un système d'injection de sorbant sec (3) avec au moins une sortie de sorbant sec (4) destinée à l'injection de sorbant sec dans le réacteur, l'au moins une sortie de sorbant sec (4) étant agencée entre l'entrée de gaz de combustion (1) et la sortie (2) dans lequel le système d'injection de sorbant sec (3) comporte une pluralité de sorties de sorbant sec (4) de telle sorte que le sorbant sec est injecté à des emplacements multiples, dans lequel la sortie de sorbant sec (4) comporte un bord de décharge inférieur (8) au niveau duquel le flux de gaz de combustion s'écoule le long de la sortie de sorbant sec (4) et au niveau duquel le sorbant sec est injecté dans la chambre de réaction, et
- une pluralité de buses d'injection d'eau (5) agencées en dessous de l'au moins une sortie de sorbant sec (4), **caractérisé en ce que**
le bord de décharge inférieur (8) s'étend vers l'arrière et vers l'avant, de telle sorte qu'une longueur du bord de décharge inférieur (8) projetée dans une direction verticale est supérieure à la largeur de la sortie de sorbant sec (4).

2. Réacteur selon la revendication 1, les buses d'injection d'eau (5) étant agencées dans un seul plan.

3. Réacteur selon la revendication 1 ou la revendication 2, les buses d'injection d'eau (5) étant dirigées vers le haut en direction de l'au moins une sortie de sorbant sec (4).

4. Réacteur selon l'une quelconque des revendications précédentes, la pluralité de sorties de sorbant sec (4) étant dirigées vers l'extérieur en direction de la paroi (6) du réacteur.

5. Réacteur selon l'une quelconque des revendications précédentes, le système d'injection de sorbant sec (3) comportant une ligne d'alimentation centrale (7) pour toutes les sorties de sorbant sec (4), la ligne d'alimentation centrale (7) menant dans le réacteur.

6. Réacteur selon l'une quelconque des revendications précédentes, dans lequel plus d'un système d'injection de sorbant sec (3) est incorporé.

7. Réacteur selon l'une quelconque des revendications précédentes, les buses d'injection d'eau (5) étant agencées de manière horizontale en décalage par rapport à l'au moins une sortie de sorbant sec (4).

8. Réacteur selon l'une quelconque des revendications précédentes, **caractérisé en ce que** le réacteur comprend une zone de section transversale du flux minimal (9), dans lequel la zone de section transversale du flux maximal (10) du réacteur au-dessus de la zone de section transversale du flux minimal (3) n'est pas supérieure à 1,5 fois la zone de section transversale du flux minimal (9).

9. Réacteur selon la revendication 8, dans lequel la zone de section transversale du flux maximal au-dessus de l'entrée de gaz de combustion (1) et en dessous de l'au moins une sortie de sorbant sec (4) n'est pas supérieure à 1,5 fois la zone de section transversale du minimal (9).

10. Réacteur selon la revendication 8 ou la revendication 9, l'au moins une sortie de sorbant sec (4) étant agencée à l'intérieur ou en dessous de la zone de section transversale du flux minimal (9).

11. Réacteur selon l'une quelconque des revendications précédentes, dans lequel une pluralité de sorties de sorbant sec (4) sont agencées dans exactement un canal d'écoulement.
